# EUROPÄISCHE PATENTSCHRIFT

(11) **EP 0 710 524 B1**
(45) Veröffentlichungstag und Bekanntmachung des Hinweises auf die Patenterteilung: **09.08.2000**
(21) Anmeldenummer: 95117414.3
(22) Anmeldetag: 06.11.1995
(51) Int. Cl.: B23Q 9/00

(54) **Vorrichtung zum Bearbeiten von Werkstücken, insbesondere von Fenster- oder Türprofilen**
Device for machining workpieces, in particular for window or door profiles
Dispositif d'usinage de pièces, notamment pour profilés de fenêtres ou portes

(30) Priorität: 04.11.1994 DE 4439101
(43) Veröffentlichungstag der Anmeldung: 08.05.1996
(73) Patentinhaber: Eisenbach, Bernd, D-65611 Brechen (DE)
(72) Erfinder: Eisenbach, Bernd, D-65611 Brechen (DE)
(74) Vertreter: Müller, Eckhard, Dr.

(56) Entgegenhaltungen:
- EP-A- 0 558 982
- DE-A- 3 008 520
- PATENT ABSTRACTS OF JAPAN & JP-A-51 115389 (KAWASAKI JUKOGYO) 10. September 1976

## Beschreibung

Die Erfindung bezieht sich auf eine Vorrichtung zum Bearbeiten eines stabförmigen Werkstückes, insbesondere von Fenster- oder Türprofilen, mit einer Aufnahme für das Werkstück, mit wenigstens einer stationären Spanneinrichtung zum Festlegen des Werkstücks auf oder in der Aufnahme, mindestens einer entlang dem zu bearbeitenden Werkstück verfahrbaren, wenigstens ein Bearbeitungswerkzeug aufweisenden Bearbeitungseinheit.

Zur Bearbeitung von stabförmigen Werkstücken, wie beispielsweise für Fenster- oder Türrahmen, insbesondere zum Einarbeiten von Bohrungen, Nuten, Schlitzen oder dergleichen, wird bei den bekannten Vorrichtungen das Profil an mehreren Stellen, beispielsweise mittels Spannzylindern, eingespannt, wobei die Bearbeitungseinheit relativ zu dem Werkstück verfahrbar ist. Die mehreren Einspannelemente sind deshalb erforderlich, um eine ordnungsgemäße Positionierung und Halterung des Werkstückes zu gewährleisten. Nachteilig hierbei ist die Vielzahl der Spannelemente, was einen erheblichen Kostenfaktor bedeutet. Ein weiterer Nachteil ist, daß die ortsfesten Spannelemente nicht immer genau in dem Bereich an dem Profil angreifen, in welcher die Bearbeitung stattfindet, so daß es zu Vibrationen des Werkstückes bei der Bearbeitung und damit zu Ungenauigkeiten, Geräuschentwicklungen kommen kann. Zudem ist durch Vibrationen des Werkstückes die Vorschubgeschwindigkeit bei der Bearbeitung begrenzt.

Eine Vorrichtung mit den eingangs genannten Merkmalen ist bereits aus der DE 30 08 520 A1 bekannt. Bei dieser Vorrichtung handelt es sich um eine Fräsmaschine zum Einfräsen von Ausnehmungen in Fenster- oder Türrahmen, mit einem Frässupport, der mindestens eine Frässpindel und einen diese antreibenden Antriebsmotor trägt. Dabei ist eine Führungseinrichtung für eine Relativbewegung zwischen der Frässpindel und dem Werkstück vorgesehen. Der Frässupport ist mit mindestens einer Stützfläche verbunden, die das Werkstück in der Nähe der Bearbeitungsstelle stützt. Die Stützflächen werden durch in einem Anschlaghalter bevorzugt verstellbar angebrachte Stützanschläge gebildet, welche als Stützrollen ausgeführt sein können. Die bekannte Vorrichtung weist eine Aufspannfläche auf, auf der das zu bearbeitende Werkstück mittels zweier stationärer Spanneinrichtungen festgelegt ist. Am Frässupport sind zwei Anschläge angebracht, wobei je nach Positionierung des Frässupports der eine oder der andere Stützanschlag sich an einer Seitenwand des zu bearbeitenden Werkstückes abstützt. Durch diese Maßnahme soll eine Vibration des beidseitig eingespannten dünnwandigen Profilstabes während der Fräsbearbeitung verhindert werden. Zugleich führen der eine oder der andere Stützanschlag den Fräser bei der Bewegung des Frässupports in Längsrichtung des zu bearbeitenden Werkstückes.

Davon ausgehend liegt der Erfindung die Aufgabe zugrunde, eine Vorrichtung der eingangs genannten Art dahingehend weiterzuentwickeln, daß unter Verzicht auf eine Vielzahl von Spannelementen eine präzise, rasche und geräuscharme Bearbeitung erreicht ist.

Diese Aufgabe wird bei der Vorrichtung mit den eingangs genannten Merkmalen gelöst durch eine entlang dem Werkstück verfahrbare Spannvorrichtung mit wenigstens zwei Spannelementen zum Einspannen des Werkstückes, die mit einer Vorschubbewegung zumindest während der Bearbeitung eines Längsschlitzes an dem zu bearbeitenden Werkstück gleiten oder abrollen sowie mit Mitteln zum Zustellen und Wegfahren wenigstens eines der Spannelemente an das bzw. von dem Werkstück, wobei die Mittel an wenigstens einem der wenigstens zwei Spannelemente vorgesehen sind. Hierdurch ist eine präzise Bearbeitung der Werkstücke erreicht. Es bedarf lediglich der Einspannung des Werkstückes mittels wenigstens einem stationären beziehungsweise ortsfesten Spannelement in einem Endbereich des zu bearbeitenden Profils. Durch die weitere Einspannung des Werkstückes mit der verfahrbaren Spannvorrichtung im Bereich des wenigstens einen Bearbeitungswerkzeuges sind Vibrationen des Werkstückes und damit auch eine Geräuschentwicklung vermieden, ebenso wie dadurch eine hohe Vorschubgeschwindigkeit erreicht ist.

In einer ersten besonderen Ausführungsform ist es vorgesehen, daß wenigstens die Spannelemente zusammen mit der Bearbeitungseinheit beziehungsweise dem Bearbeitungswerkzeug verfahrbar sind, so daß es nur eines einzähligen Antriebes für das Verfahren des wenigstens einen Spannelementes und Bearbeitungseinheit bedarf.

Bevorzugt ist nach der Erfindung an gegenüberliegenden Seitenwandungen des in Bearbeitungsposition befindlichen Werkstückes jeweils wenigstens ein Spannelement vorgesehen, wodurch an jeder Position der gegenüberliegenden Seitenwandungen des Werkstückes eine Bearbeitung durchgeführt werden kann.

Auch kann es sich nach der Erfindung empfehlen, ein weiteres auf der Oberseite des in Bearbeitungsstellung in der Aufnahme befindlichen Werkstückes angreifendes, das Werkstück auf die Aufnahme pressendes Spannelement vorzusehen, wodurch eine allseitige Einspannung des Werkstückes im Bereich der Bearbeitungseinheit erreicht ist.

Weiterhin empfiehlt es sich nach der Erfindung, daß wenigstens eines der Spannelemente, insbesondere das, welches auf der Oberseite des in Bearbeitungsposition befindlichen Werkstückes, oder dasjenige welches auf der der Referenzlage des Werkstückes abgewandten Seitenwandung angreift, mittels einer elastischen Kraft auf beziehungsweise an das Werkstück gedrückt ist, so daß etwaige Profiltoleranzen ausgeglichen werden können.

Als verfahrbare Spannelemente kommen beispielsweise Plattenelemente in Betracht, welche beim Verfahren der Bearbeitungseinheit an den äußeren Wandungen des Profils entlang gleiten.

Vorteilhafterweise werden als Spannelemente nach einer Ausgestaltung der Erfindung mindestens eine an dem Werkstück beim Verfahren der Bearbeitungseinheit abrollende Walze, Rolle oder dergleichen Abrollelement vorgesehen, so daß ein kontinuierliches, ruckfreies Verschieben der Spannelemente an den Profilen gewährleistet ist.

Insbesondere empfiehlt es sich nach der Erfindung, daß die Spannelemente mittels einem um Walzen, Rollen oder dergleichen Abrollelemente umlaufendes Band an dem Werkstück beim Verfahren der Bearbeitungseinheit abrollen. Dabei kann das Band aus Kunststoff, Gummi oder einer Kette mit einem, vorzugsweise abriebfesten Kunststoff- oder Gummibelag bestehen, so daß Werkstückbeschädigungen vermieden sind.

Um ein einfaches Einlegen der zu bearbeitenden Profile zu erreichen, ist wenigstens eines der Spannelemente an das Werkstück zustellbar und von diesem wegfahrbar, was mittels einer Kolben-Zylinder-Anordnung erfolgen kann. Dabei kann die Kolben-Zylinder-Anordnung gleichzeitig zum Erzeugen eines definierten Anpreßdruckes auf das Profil eingesetzt werden.

Im Falle, daß an gegenüberliegenden Seitenwandungen des Werkstückes angreifende Spannelemente vorgesehen sind, sollte wenigstens eines der Spannelemente in eine definiertere Lage verfahrbar sein, welche einen Referenzpunkt für das Werkstück beziehungsweise für die Bearbeitungseinheit bildet.

Besonders vorteilhaft es ist auch, wenn die verfahrbaren Spannelemente in einer von den ortsfesten Spannelementen verschiedenen Ebene zu liegen kommen. Hierdurch ist eine Bearbeitung des Profiles auch in dessen Endbereichen möglich, ohne daß die ortsfesten Spannelemente entfernt werden müßten.

Selbstverständlich ist es nach der Erfindung auch möglich, daß beidseitig der Bearbeitungswerkzeuge der Bearbeitungseinheit verfahrbare Spannelemente vorgesehen sind.

Schließlich ist es nach der Erfindung vorgesehen, daß wenigstens eines der Spannelemente zusammen mit der Aufnahme für das Werkstück verdrehbar bezüglich der Bearbeitungseinheit ausgebildet ist. Hierdurch ist eine allseitige Bearbeitung des Werkstückes ermöglicht.

Weitere Vorteile und Anwendungsmöglichkeiten der vorliegenden Erfindung ergeben sich aus der nachfolgenden Beschreibung eines Ausführungsbeispieles anhand der Zeichnung.

Es zeigen:
- Figur 1: eine schematische Seitenansicht einer erfindungsgemäßen Bearbeitungseinheit mit verfahrbaren Spannelementen,
- Figur 2: eine schematische Darstellung der Referenzpunkteinstellung der Vorrichtung gemäß Figur 1 und
- Figur 3: eine perspektivische Ansicht der Bearbeitungseinheit, ähnlich derjenigen gemäß Figur 1.

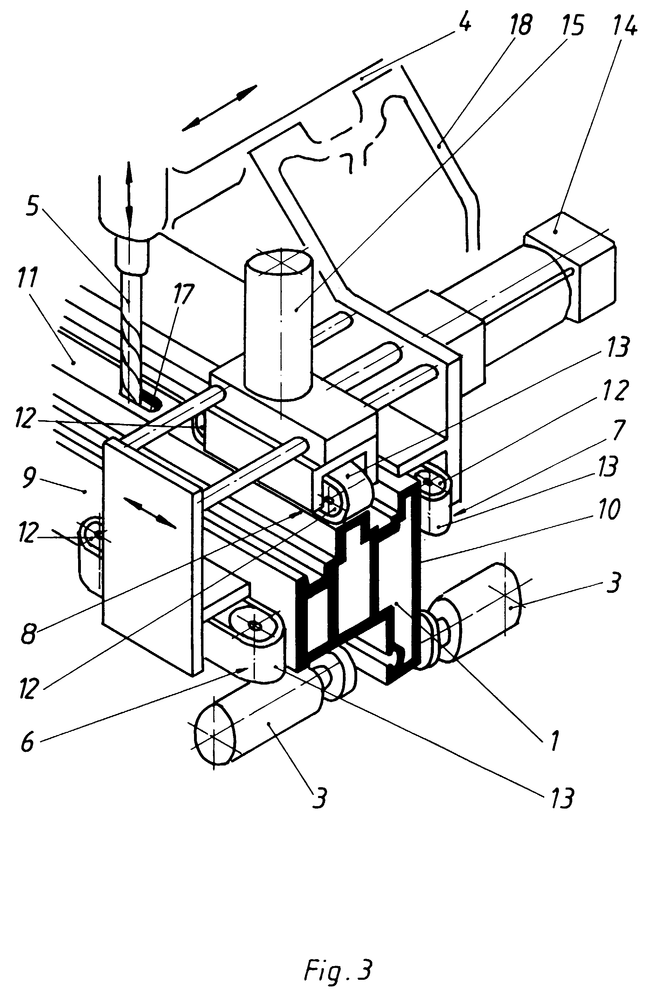

Die Vorrichtung zum Bearbeiten von stabförmigen Werkstücken ist bei dem hier gewählten Ausführungsbeispiel als Bearbeitungszentrum zur Bearbeitung von Profilen 1 für Fenster- oder Türrahmen ausgebildet. Die Vorrichtung weist ein (nur angedeutetes) Untergestell 16 auf, an welchem die Aufnahme 2 für die Profile 1 angeordnet ist. An dem einen Endbereich des Profiles 1 greifen zwei stationäre Spannelemente 3 an, welche etwas genauer aus Figur 3 zu ersehen ist.

Die Bearbeitungseinheit 4 weist bei der hier dargestellten Ausführungsform einen Fräser 5 zum Einfräsen eines Langschlitzes 17 (Figur 3) auf. Selbstverständlich ist es auch möglich, daß an der Bearbeitungseinheit 4 Bohrer, Gewindebohrer, Sägen, Scheibenfräser oder dergleichen Bearbeitungswerkzeuge angeordnet sind. Die Bearbeitungseinheit 4 ist in drei Richtungen verfahrbar, nämlich in Längsrichtung, in Querrichtung und in vertikaler Richtung bzgl. des zu bearbeitenden Profils 1; dies ist durch Pfeile in Figur 3 angedeutet. Die Steuerung der Bearbeitungseinheit 4 kann mittels einer SPS-, CNC- oder einer ähnlichen Steuerung erfolgen, um das gewünschte Fräs- oder Bohrbild zu erhalten.

Bei einem Verfahren der Bearbeitungseinheit 4 ist das Werkstück 1 in unmittelbarer Nähe des Bearbeitungswerkzeuges 5 mittels verfahrbarer Spannelemente 6, 7 und 8 eingespannt. Diese Spannelemente 6, 7, 8 sind bei dem hier gewählten Ausführungsbeispiel fest mit der Bearbeitungseinheit 4 über ein Trägerteil 18 verbunden.

Die Spannelemente 6, 7 und 8 weisen bei der hier gezeigten Ausführungsform mehrere hintereinander angeordnete Rollen 12 auf, auf welchen ein Band 13 umläuft. Das Band 13 kann bspw. aus Kunststoff, Gummi oder auch aus einer Kette mit einem abriebfesten Kunststoff- oder Gummi-Belag gebildet sein. Vor dem eigentlichen Bearbeiten werden die Spannelemente 6 und 7 und 8 in Anlage- bzw. Spannstellung an das Profil 1 gebracht. Hierfür sind, bspw. pneumatisch betätigbare Spannzylinder 14 und 15 vorgesehen.

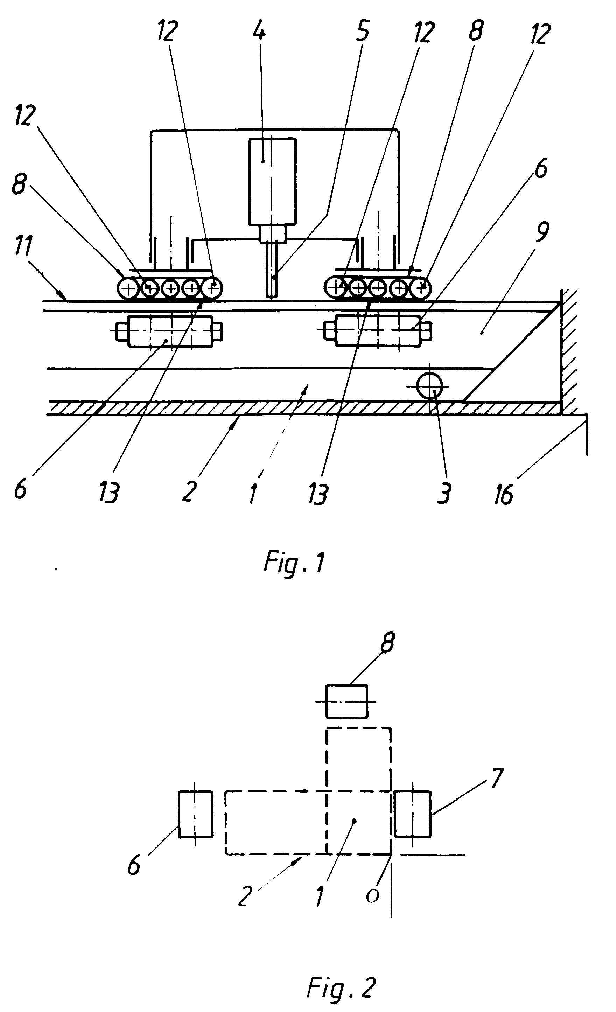

Das Einspannen des Werkstückes 1 mittels den seitlichen Spannelementen 6, 7 erfolgt derart, daß, wie in Figur 2 angedeutet, zur Erzeugung eines Referenzpunktes 0 für das Bearbeitungswerkzeug 5 bzw. die Bearbeitungseinheit 4 zunächst das Spannelement 7 in eine vorgegebene Referenzlage 0 an das Werkstück 1 gefahren wird. Selbstverständlich ist es auch möglich, daß das eine Spannelement 7 feststehend angeordnet und bzgl. des Referenzpunktes 0 ausgerichtet ist. Danach wird mit Hilfe der Kolben-Zylinder-Einheit 14 das Spannelement 6 gegen das Profil 1 gepreßt, so daß sich das zu bearbeitende Profil 1 in Preßstellung zwischen den Spannelementen 6 und 7 befindet. Hierdurch ist der Referenzpunkt 0 für die Bearbeitungseinheit 4 geschaffen. Gleichzeitig oder während dieser Spanneinstellung wird der Spannzylinder 15 betätigt, so daß auch das obere Spannelement 8 auf das Profil 1 drückt und es auf die Aufnahme 2 preßt.

Während der Bearbeitung des Längsschlitzes 17 wird die Bearbeitungseinheit 4 bei der hier dargestellten Bearbeitung in Längsrichtung bzgl. des Profiles 1 verfahren. Dabei rollen die Spannelemente 6, 7 und 8 mit ihren Rollen 12 bzw. mit ihrem Band 13 auf bzw. an dem Werkstück 1 ab, so daß es während der Bearbeitung präzise gehalten ist. Hierdurch werden Bohr- oder Fräsbilder von hoher Präzision erzielt, da das Werkstück 1 in unmittelbar Nähe des Bearbeitungswerkzeuges 5 fest eingespannt ist. Durch den Einsatz eines an dem Profil 1 abrollenden Bandes 13 kommt es trotz hoher Einspannkräfte auch nicht zu unerwünschten Impressionen oder Beschädigungen an dem Profil. Weiterhin ist eine geräuscharme Bearbeitung mit hoher Vorschubgeschwindigkeit erreicht.

Weiterhin ist die Anordnung so getroffen, daß die Spannelemente 6 und 7 oberhalb der stationären Spanneinheiten 3 zu liegen kommen, so daß das Werkstück 1 auch im Endbereich der ortsfesten Einspannung bearbeitet werden kann, ohne daß die Spannelemente 3 entfernt werden müssen.

In Figur 3 ist lediglich ein Detail der Bearbeitungseinheit 4 mit Spannelementen 6, 7, 8 dargestellt. Selbstverständlich ist es auch möglich, daß diese Spannelemente, wie aus Figur 1 zu ersehen, beidseitig des Bearbeitungswerkzeuges 5 an der Bearbeitungseinheit 4 vorgesehen sind.

Das von oben auf das Profil 1 wirkende Spannelement 8 ist vorzugsweise federnd gelagert, um zusätzlich Profiltoleranzen auszugleichen.

Auch kann es sich auch empfehlen, daß die Spannelemente 6, 7 und 8 zusammen mit der Auflage 2 bzgl. der Bearbeitungseinheit 4 verdrehbar ausgebildet sind, so daß nicht nur eine Bearbeitung des Werkstückes 1 auf der Oberseite 11 entsprechend den Figuren, sondern auch an den Seitenwandungen 9, 10 oder an der Unterseite ermöglicht ist. Dies läßt sich bspw. dadurch erreichen, daß das Trägerteil 18 mit Auflage 2 gegenüber der Bearbeitungseinheit 4 verdrehbar ausgebildet ist.

### Bezugszeichenliste

- 1 -: Werkstück
- 2 -: Aufnahme
- 3 -: Spanneinrichtung, Spannelement
- 4 -: Bearbeitungseinheit
- 5 -: Bearbeitungswerkzeug, Fräser
- 6 -: Spannelement
- 7 -: Spannelement
- 8 -: Spannelement
- 9 -: Seitenwandung
- 10 -: Seitenwandung
- 11 -: Oberseite
- 12 -: Rolle
- 13 -: Band
- 14 -: Kolben-Zylinder-Anordnung, Spannzylinder
- 15 -: Kolben-Zylinder-Anordnung
- 16 -: Untergestell
- 17 -: Längsschlitz
- 18 -: Trägerteil

- 0 -: Referenzpunkt

## Patentansprüche

1. Vorrichtung zum Bearbeiten eines stabförmigen Werkstückes, insbesondere von Fenster- und Türprofilen (1), mit einer Aufnahme (2) für das Werkstück, mit wenigstens einer stationären Spanneinrichtung (3) zum Festlegen des Werkstücks auf oder in der Aufnahme (2), mit wenigstens einer entlang dem zu bearbeitenden Werkstück verfahrbaren, wenigstens ein Bearbeitungswerkzeug (5) aufweisenden Bearbeitungseinheit (4), gekennzeichnet durch eine entlang dem Werkstück verfahrbare Spannvorrichtung mit wenigstens zwei Spannelementen (6, 7, 8) zum Einspannen des Werkstückes, die mit einer Vorschubbewegung zumindest während der Bearbeitung eines Längsschlitzes (17) an dem zu bearbeitenden Werkstück gleiten oder abrollen sowie mit Mitteln zum Zustellen an und Wegfahren wenigstens eines der Spannelemente (6, 7, 8) an das bzw. von dem Werkstück, wobei die Mittel an wenigstens einem der wenigstens zwei Spannelemente (6, 7, 8) vorgesehen sind.

2. Vorrichtung nach Anspruch 1, dadurch gekennzeichnet, daß die Spannelemente (6, 7; 8) zusammen mit der Bearbeitungseinheit (4) verfahrbar sind.

3. Vorrichtung nach Anspruch 1 oder 2, dadurch gekennzeichnet, daß wenigstens ein Spannelement (6, 7; 8) als mit der Bearbeitungseinheit verfahrbare Anlage für das Werkstück ausgebildet ist.

4. Vorrichtung nach einem der vorhergehenen Ansprüche, dadurch gekennzeichnet, daß die wenigstens zwei Spannelemente (6, 7, 8) einander gegenüberliegend angeordnet.

5. Vorrichtung nach einem der vorhergehenden Ansprüche, dadurch gekennzeichnet, daß wenigstens eines der Spannelemente (6, 7, 8) als auf der Oberseite (11) des in Bearbeitungsposition an beziehungsweise in der Aufnahme (2) befindlichen Werkstückes (1) angreifendes, das Werkstück (1) auf die Aufnahme (2) pressendes Spannelement (8) vorgesehen ist.

6. Vorrichtung nach einem der vorhergehenden Ansprüche, dadurch gekennzeichnet, daß wenigstens eines der Spannelemente (6, 7; 8) mittels einer elastischen Kraft auf beziehungsweise an das Werkstück (1) gedrückt ist.

7. Vorrichtung nach einem der vorhergehenden Ansprüche, dadurch gekennzeichnet, daß wenigstens eines der Spannelemente (6, 7; 8) ein an dem Werkstück (1) beim Verschieben der Bearbeitungseinheit (4) entlanggleitendes Plattenelement aufweist.

8. Vorrichtung nach einem der Ansprüche 1 bis 6, dadurch gekennzeichnet, daß wenigstens eines der Spannelemente (6, 7; 8) mindestens eine beim Verfahren der Bearbeitungseinheit (4) an dem Werkstück (1) abrollende Walze, Rolle (12) oder dergleichen Abrollelement aufweist.

9. Vorrichtung nach einem der Ansprüche 1 bis 6, dadurch gekennzeichnet, daß wenigstens eines der Spannelemente (6, 7; 8) mittels einem um Walzen, Rollen (12) oder dergleichen Abrollelemente umlaufenden Band (13) an dem Werkstück (1) beim Verfahren der Bearbeitungseinheit (4) abrollt.

10. Vorrichtung nach Anspruch 9, dadurch gekennzeichnet, daß das Band (13) aus Kunststoff, Gummi oder einer Kette mit einem, vorzugsweise abriebfesten, Kunststoff- oder Gummibelag besteht.

11. Vorrichtung nach einem der vorhergehenden Ansprüche, dadurch gekennzeichnet, daß wenigstens ein Spannelement (6, 7; 8) mit einer Kolben-Zylinder-Anordnung (14, 15) an das Werkstück (1) zustellbar und von diesem wegfahrbar ist.

12. Vorrichtung nach einem der vorhergehenden Ansprüche, dadurch gekennzeichnet, daß bei gegenüberliegend an dem Werkstück (1) angreifenden Spannelementen (6, 7) wenigstens ein Spannelement (7) in eine Referenzlage bezüglich des Werkstückes (1) beziehungsweise für die Bearbeitungseinheit (4) verfahrbar ist.

13. Vorrichtung nach einem der vorhergehenden Ansprüche, dadurch gekennzeichnet, daß wenigstens eines der Spannelemente (6, 7; 8) in einer von den stationären Spannelementen (3) verschiedenen Ebene zu liegen kommt.

14. Vorrichtung nach einem der vorhergehenden Ansprüche, dadurch gekennzeichnet, daß verfahrbare Spannelemente (6, 7; 8) beidseitig des wenigstens einen Bearbeitungswerkzeuges (5) der Bearbeitungseinheit (4) angeordnet sind.

15. Vorrichtung nach einem der vorhergehenden Ansprüche, dadurch gekennzeichnet, daß wenigstens eines der Spannelemente (6, 7; 8) zusammen mit der Aufnahme (2) für das Werkstück (1) verdrehbar bezüglich der Bearbeitungseinheit (4) ausgebildet ist.

## Claims

1. Device for the processing of a rod-shaped workpiece, especially of window and door profile members (1), with a mount (2) for the workpiece, with at least one stationary clamping device (3) for fixing the workpiece on or in the mount (2), and with at least one processing unit (4) which is movable along the workpiece to be processed and comprises at least one processing tool (5), characterised by a clamping device, which is movable along the workpiece, with at least two clamping elements (6, 7, 8) for clamping in the workpiece which, by a feeding movement, slide or roll against the workpiece, which is to be processed, at least during the processing of a longitudinal slot (17), as well as with means for taking at least one of the clamping elements (6, 7, 8) to and moving that away from the workpiece, wherein the means are provided at at least one of the at least two clamping elements (6, 7, 8).

2. Device according to claim 1, characterised in that the clamping elements (6, 7; 8) are movable together with the processing unit (4).

3. Device according to claim 1 or 2, characterised in that at least one clamping element (6, 7; 8) is constructed as a support, which is movable with the processing unit, for the workpiece.

4. Device according to one of the preceding claims, characterised in that the at least two clamping elements (6, 7, 8) are arranged opposite one another.

5. Device according to one of the preceding claims, characterised in that at least one of the clamping elements (6, 7, 8) is provided as a clamping element (8) engaging on the upper side (11) of the workpiece (1), which in the processing position is disposed at or in the mount (2), and pressing the workpiece (1) onto the mount (2).

6. Device according to one of the preceding claims, characterised in that at least one of the clamping elements (6, 7; 8) is pressed onto or against the workpiece (1) by means of a resilient force.

7. Device according to one of the preceding claims, characterised in that at least one of the clamping elements (6, 7; 8) comprises a plate element sliding along the workpiece (1) during displacement of the processing unit (4).

8. Device according to one of claims 1 to 6, characterised in that at least one of the clamping elements (6, 7; 8) comprises at least one roll, roller (12) or like rollable element rolling against the workpiece (1) during movement of the processing unit (4).

9. Device according to one of claims 1 to 6, characterised in that at least one of the clamping elements (6, 7; 8) rolls against the workpiece (1) by means of a belt (13), which runs around rolls, rollers (12) or like rollable elements, during movement of the processing unit (4).

10. Device according to claim 9, characterised in that the belt (13) consists of synthetic material, rubber or a chain with a preferably wear-resistant synthetic material or rubber coating.

11. Device according to one of the preceding claims, characterised in that at least one clamping element (6, 7; 8) is feedable by a piston-cylinder arrangement (14, 15) to the workpiece (1) and movable away from this.

12. Device according to one of the preceding claims, characterised in that in the case of clamping elements (6, 7) oppositely engaging the workpiece (1) at least one clamping element (7) is movable into a reference position with respect to the workpiece (1) or for the processing unit (4).

13. Device according to one of the preceding claims, characterised in that at least one of the clamping elements (6, 7; 8) comes to lie in a plane different from the stationery clamping elements (3).

14. Device according to one of the preceding claims, characterised in that movable clamping elements (6, 7; 8) are arranged on both sides of the at least one processing tool (5) of the processing unit (4).

15. Device according to one of the preceding claims, characterised in that at least one of the clamping elements (6, 7; 8) is constructed to be rotatable relative to the processing unit (4) together with the mount (2) for the workpiece (1).

## Revendications

1. Dispositif pour usiner une pièce en forme de barre, notamment des profilés (1) de fenêtres et de portes, comportant un logement (2) pour la pièce, au moins un dispositif fixe de serrage (3) servant à fixer la pièce sur ou dans le logement (2), au moins une unité d'usinage (4) qui est déplaçable le long de la pièce à usiner et possède au moins un outil d'usinage (5), caractérisé par un dispositif de serrage, qui est déplaçable le long de la pièce et comporte au moins deux éléments de serrage (6, 7, 8) servant à serrer la pièce et qui glissent ou roulent sur la pièce à usiner avec un déplacement d'avance au moins pendant l'usinage d'une fente longitudinale (17), ainsi que des moyens pour rapprocher et écarter de la pièce d'au moins l'un des éléments de serrage (6, 7, 8), les moyens étant prévus sur au moins l'un des au moins deux éléments de serrage (6, 7, 8).

2. Dispositif selon la revendication 1, caractérisé en ce que les éléments de serrage (6, 7; 8) sont déplaçables conjointement avec l'unité d'usinage (4).

3. Dispositif selon la revendication 1 ou 2, caractérisé en ce qu'au moins un élément de serrage (6, 7; 8) est agencé sous la forme d'un élément d'application pour la pièce, qui est déplaçable avec l'unité d'usinage.

4. Dispositif selon l'une des revendications précédentes, caractérisé en ce que les au moins deux éléments de serrage (6, 7, 8) sont disposés en vis-à-vis l'un de l'autre.

5. Dispositif selon l'une des revendications précédentes, caractérisé en ce qu'au moins l'un des éléments de serrage (6, 7, 8) est prévu sous la forme d'un élément de serrage (8) qui s'applique sur la surface supérieure (11) de La pièce (1), située dans la position d'usinage sur ou dans le logement (2), et repousse la pièce (1) dans le logement (2).

6. Dispositif selon l'une des revendications précédentes, caractérisé en ce qu'au moins l'un des éléments de serrage (6, 7; 8) est repoussé à l'aide d'une force élastique sur ou contre la pièce (1).

7. Dispositif selon l'une des revendications précédentes, caractérisé en ce qu'au moins l'un des éléments de serrage (6, 7; 8) possède un élément en forme de plaque, qui glisse sur la pièce (1) lors du déplacement de l'unité d'usinage (4).

8. Dispositif selon l'une des revendications 1 à 6, caractérisé en ce qu'au moins l'un des éléments de serrage (6, 7; 8) comporte au moins un cylindre, un rouleau (12) ou un élément roulant analogue, qui roule sur la pièce (1) lors du déplacement de l'unité d'usinage (4).

9. Dispositif selon l'une des revendications 1 à 6, caractérisé en ce qu'au moins l'un des éléments de serrage (6, 7; 8) roule à l'aide d'au moins une bande (13) qui circule sur des cylindres, des rouleaux (12) ou des éléments roulants analogues, sur la pièce (1) lors du déplacement de l'unité d'usinage (4).

10. Dispositif selon la revendication 9, caractérisé en ce que la bande (13) est réalisée en matière plastique, en caoutchouc ou est formée par une chaîne possédant un revêtement en matière plastique ou en caoutchouc, et de préférence est résistante à l'usure.

11. Dispositif selon l'une des revendications précédentes, caractérisé en ce qu'au moins un élément de serrage (6, 7; 8) peut être rapproché ou écarté de la pièce (1) à l'aide d'un dispositif à piston et cylindre (14, 15).

12. Dispositif selon l'une des revendications précédentes, caractérisé en ce que dans le cas d'éléments de serrage (6, 7) s'appliquant sur des côtés opposés contre la pièce (1), au moins un élément de serrage (7) peut être amené dans une position de référence par rapport à la pièce (1) ou pour l'unité d'usinage (4).

13. Dispositif selon l'une des revendications précédentes, caractérisé en ce qu'au moins l'un des éléments de serrage (6, 7; 8) vient s'appliquer dans un plan différent de celui des éléments de serrage (3).

14. Dispositif selon l'une des revendications précédentes, caractérisé en ce que des éléments de serrage déplaçables (6, 7; 8) sont disposés des deux côtés du au moins un outil d'usinage (5) de l'unité d'usinage (4).

15. Dispositif selon l'une des revendications précédentes, caractérisé en ce qu'au moins l'un des éléments de serrage (6, 7; 8) est agencé, conjointement avec le logement (2) pour la pièce (1), de manière à pouvoir tourner par rapport à l'unité d'usinage (4).
